# EUROPÄISCHE PATENTSCHRIFT

(11) **EP 3 181 308 B1**
(45) Veröffentlichungstag und Bekanntmachung des Hinweises auf die Patenterteilung: **16.09.2020**
(21) Anmeldenummer: 16204706.2
(22) Anmeldetag: 16.12.2016
(51) Int. Cl.: B25J 9/00, B25J 21/00, B23Q 11/08

(54) **BEARBEITUNGSEINRICHTUNG UND BEARBEITUNGSVERFAHREN**
PROCESSING DEVICE AND PROCESSING METHOD
DISPOSITIF D'USINAGE ET PROCÉDÉ D'USINAGE

(30) Priorität: 16.12.2015 DE 202015106871 U
(43) Veröffentlichungstag der Anmeldung: 21.06.2017
(73) Patentinhaber: KUKA Deutschland GmbH, 86165 Augsburg (DE)
(72) Erfinder: BAYER, Stefan, 86157 Augsburg (DE); FRIEDEL, Holger, 86179 Augsburg (DE)
(74) Vertreter: Ernicke, Klaus Stefan

(56) Entgegenhaltungen:
- DE-U1-202011 103 226
- DE-U1-202013 102 380
- JP-U- H02 104 984

## Beschreibung

Die Erfindung betrifft eine Bearbeitungseinrichtung und ein Bearbeitungsverfahren für Werkstücke mit den Merkmalen im Oberbegriff des Verfahrens- und Vorrichtungshauptanspruchs.

Eine solche Bearbeitungseinrichtung und ein solches Verfahren sind aus den Dokumenten DE 20 2013 102 380 U1 und DE 20 2011 103 226 U1 bekannt.

Aus der Praxis ist es bekannt, Bearbeitungsprozesse an Werkstücken, insbesondere spanende Prozesse, in einer großen Werkhalle durchzuführen, welche eine Vielzahl von Bearbeitungsgeräten und Arbeitsstellen umgibt. Ferner sind Bearbeitungszellen bekannt, bei denen in der Zelle ein Industrieroboter ein ebenfalls in der Zelle befindliches Werkstück bearbeitet.
Es ist Aufgabe der vorliegenden Erfindung, eine verbesserte Bearbeitungstechnik aufzuzeigen.

Die Erfindung löst diese Aufgabe mit den Merkmalen des Verfahrens- und Vorrichtungshauptanspruchs.
Die beanspruchte Bearbeitungstechnik, d.h. die Bearbeitungseinrichtung und das Bearbeitungsverfahren, haben verschiedene Vorteile.
Der oder die Behandlungsprozesse am Werkstück finden in einer allseitig umschlossenen Prozesskammer statt, die mehrere verschließbare Zugänge für ein externes Bearbeitungsgerät und für eine Werkstückzuführung aufweist. Die Zugänge sind an verschiedenen Kammerseiten, insbesondere gegenüber liegend, angeordnet. Das Bearbeitungsgerät ist außerhalb der Prozesskammer angeordnet und reicht zur Durchführung des Bearbeitungsprozesses mit seinem Endeffektor in den Innenraum der Prozesskammer und das dort befindliche Werkstück.

Hierdurch kann das umgebende Raum- oder Kammervolumen an der Prozess- und Bearbeitungsstelle reduziert werden.
Außerdem kann der Platz- und Bauaufwand für die Prozesskammer reduziert werden. Ferner werden durch den oder die verschließbaren Zugänge die Zugangssicherheit für einen Werker und die Prozesssicherheit erhöht.

Eine aufrechte Werkstücklage in der Prozesskammer hat den Vorteil, dass die prozessrelevanten Werkstückbereiche für ein externes Bearbeitungsgerät, insbesondere einen programmierbaren Industrieroboter, besonders gut zugänglich sind. Die Reichweite, der Bau- und Kostenaufwand für das Bearbeitungsgerät können dadurch reduziert werden.

Die beanspruchte Bearbeitungseinrichtung kann eine einzelne oder eine Mehrfachanordnung von Prozesskammern umfassen. Sie kann zusätzlich weitere Komponenten, insbesondere ein oder mehrere solcher bevorzugt automatischen Bearbeitungsgeräte, eine Einhausung oder dgl. beeinhalten.

Die Prozesskammer kann eine zusätzliche Behandlungseinrichtung aufweisen. Diese kann unterschiedlichen Zwecken dienen. Sie kann z.B. für die zusätzliche Behandlung, insbesondere Nachbehandlung, eines in der Prozesskammer aufgenommenen Werkstücks und/oder für die innere Kammerumgebung, insbesondere die Kammerluft, vorgesehen sein. Alternativ oder zusätzlich können andere Behandlungsprozesse und -einrichtungen vorgesehen sein.

Die Behandlungseinrichtung kann an der Kammerwandung angeordnet sein und/oder die Kammerwandung bilden. Hierdurch ist eine besonders kompakte und kostengünstige Bauweise möglich.

Außerdem ist es für den oder die zusätzlichen Behandlungsprozesse und die Behandlungseinrichtung günstig, dass die Prozesskammer ein reduziertes Kammervolumen aufweist und dass das Bearbeitungsgerät und ein Aufgabebereich der Werkstückzuführung außerhalb angeordnet sein können. Ein Behandlungsprozess kann z.B. in einem Absaugen und Reinigen von Kammerluft und darin enthaltener Partikel, insbesondere Prozessrückständen, bestehen. Hierfür ist ein reduziertes Kammervolumen von besonderem Vorteil. Ein alternativer oder zusätzlicher Behandlungsprozess kann in einer Reinigung des Werkstücks während und bevorzugt nach der Bearbeitung, bestehen. Alternativ oder zusätzlich sind weitere Behandlungsprozesse möglich. Der oder die Behandlungsprozesse werden vorzugsweise bei verschlossener Prozesskammer durchgeführt.

Die zwei oder mehr verschließbaren Zugänge der Prozesskammer haben den Vorteil, dass durch abwechselndes Öffnen und Verschließen der Zugänge die Prozesssicherheit erhöht werden kann. Insbesondere kann bei einer manuellen Werkstückzuführung der Zugang zu dem externen und bevorzugt automatischen Bearbeitungsgerät geschlossen sein, was die Unfallsicherheit erhöht und den Werkerzugang zum Geräte- oder Roboterbereich sperrt sowie vor etwaigen negativen Einflüssen von benachbarten Prozesskammern und dortigen Prozessen schützt. Bei einer mechanisierten und ggf. automatisierten Werkstückzuführung ergeben sich entsprechende Vorteile.

Während des Bearbeitungsprozesses ist der zuführseitige Zugang der Prozesskammer geschlossen und der zum Bearbeitungsgerät weisende Zugang geöffnet. Dies erhöht die Sicherheit der äußeren Kammerumgebung und eines hier befindlichen Werkers. Der Bearbeitungsprozess kann innerhalb der Prozesskammer in einem weitgehend und bis auf den geräteseitigen Zugang rundum geschlossenen Raum stattfinden. Die erwähnte Werkstückzuführung schließt auch die Abfuhr eines bearbeiteten Werkstücks ein, wobei hier die Zugänge wieder abwechselnd geöffnet und geschlossen werden. Das bearbeiteten Werkstück kann durch den zuführseitigen Zugang abgeführt werden.

Die Werkstückzuführung ist bevorzugt als bewegliche und angetriebene Zuführeinrichtung ausgebildet. Diese kann einen beweglichen, insbesondere drehbaren, Werkstückträger und eine steuerbare Stelleinrichtung hierfür aufweisen. Das Werkstück kann dabei manuell oder automatisch, z.B. mittels eines Handlingroboters, an den drehbaren Werkstückträger übergeben und ggf. nach der Bearbeitung wieder übernommen werden. Dies kann außerhalb der Prozesskammer geschehen.

Für einen reduzierten Bau- und Platzaufwand bildet gemäß der Erfindung eine Werkstückaufnahme den zur Werkstückzuführung weisenden Verschluss Dies gilt insbesondere, wenn die Werkstückaufnahme in der Verschlussstellung stehend angeordnet ist und das Werkstück dadurch die besagte aufrechte Lage einnehmen kann. Die Werkstückaufnahme kann dadurch eine Doppelfunktion als Verschluss und als Werkstückträger erfüllen.
Zudem ist eine aufrechte Werkstücklage bei abtragenden, insbesondere spanabhebenden, Prozessen günstig, weil die Abtragspartikel nach unten fallen und leichter vom Werkstück entfernt und entsorgt werden können. Die aufrechte Werkstücklage ist auch für die Effizienz eines zusätzlichen Behandlungsprozesses, insbesondere in Verbindung mit einem Absaugen der Kammerluft und/oder einem Anblasen des Werkstücks, von Vorteil. Das Kammervolumen kann deutlich gemindert und dadurch die Prozesseffizienz gesteigert werden. Zudem können die betreffenden Komponenten der Behandlungseinrichtung nahe an dem in der Prozesskammer aufgenommene Werkstück angeordnet werden.

Die Prozesseinrichtung kann mehrere Prozesskammern beeinhalten, die vorzugsweise im Arbeitsbereich eines gemeinsamen Bearbeitungsgeräts angeordnet sind. Besonders günstig ist eine bogenförmige Kammeranordnung um ein zentrales Bearbeitungsgerät. Hierdurch können Bearbeitungsprozesse und Rüstprozesse für den Werkstückwechsel zeitlich überschnitten werden. Nach Abschluss eines Bearbeitungsprozesses kann das Bearbeitungsgerät sofort zur nächsten Prozesskammer und einem dort bereit gestellten Werkstück wechseln, während das zuvor bearbeitete Werkstück in seiner wieder geschlossenen Prozesskammer ggf. nachbehandelt und gewechselt werden kann. Dies erhöht deutlich die Bearbeitungseffizienz und sorgt für eine optimierte Auslastung und Effizienz des Bearbeitungsgeräts, insbesondere eines Industrieroboters.

Außerdem können der insgesamt beanspruchte Bauraum und der Bauaufwand für eine solche mehrständige Bearbeitungseinrichtung deutlich reduziert werden. Die Prozesskammern können in Verbindung miteinander eine kompakte zellenartige, z.B. kubische Bearbeitungsstation mit einem innen liegenden Geräte- oder Roboterraum bilden. Sie können dabei auch eine schützende Einhausung für das Bearbeitungsgerät, insbesondere einen Industrieroboter, bilden. Die besagte aufrechte Werkstücklage ist für eine solche mehrständige Bearbeitungseinrichtung von besonderem Vorteil.

In den Unteransprüchen sind weitere vorteilhafte Ausgestaltungen der Erfindung angegeben.

Die Bearbeitungseinrichtung und das Bearbeitungsverfahren können auch die nachstehenden Ausgestaltungsmerkmale jeweils einzeln oder in beliebig geeigneter Kombination aufweisen.

Die in der Prozesskammer befindliche Behandlungseinrichtung ist an der Kammerwandung angeordnet und/oder bildet die Kammerwandung.
Die Prozesskammer kann zwei oder mehr verschließbare Zugänge aufweisen. Diese sind gemäß der Erfindung an verschiedenen Kammerseiten, insbesondere gegenüber liegend, angeordnet

Der zu einem externen Bearbeitungsgerät weisende Verschluss des bearbeitungsseitigen Zugangs kann als Rolltor ausgebildet sein.
Die Werkstückzuführung kann als bewegliche und angetriebene Zuführeinrichtung ausgebildet sein.
Die Zuführeinrichtung kann einen beweglichen, insbesondere drehbaren, Werkstückträger und eine steuerbare Stelleinrichtung hierfür aufweisen.

Ein Werkstückträger der Zuführeinrichtung kann die Werkstückaufnahme und den Verschluss des zuführseitigen Zugangs bilden.
Ein Werkstückträger der Zuführeinrichtung kann eine Spanneinrichtung für das ein- oder mehrteilige Werkstück aufweisen.
Eine Stelleinrichtung der Zuführeinrichtung kann als Kippeinrichtung oder Dreheinrichtung ausgebildet sein. Sie kann den Werkstückträger aus einer liegenden Zuführposition in eine stehende Aufnahme- und Verschlussposition dreht. Alternativ ist eine stehende seitliche Zuführposition und eine Drehung um eine aufrechte Achse möglich.

Die Bearbeitungseinrichtung kann eine Andrückeinrichtung für den Werkstückträger in der stehenden Aufnahme- und Verschlussposition aufweisen.

Die Prozesskammer kann eine zusätzliche Behandlungseinrichtung für das in der Prozesskammer aufgenommene Werkstück und/oder die innere Kammerumgebung, insbesondere die Kammerluft, aufweisen.

Die Behandlungseinrichtung kann derart gesteuert sein, dass sie erst bei geschlossener Prozesskammer aktiv wird.

Die Behandlungseinrichtung kann eine
Entsorgungseinrichtung für die Kammerluft und darin enthaltene Partikel, insbesondere Prozessrückstände, aufweisen.

Die Behandlungseinrichtung kann eine Luftzufuhr für den Innenraum der Prozesskammer aufweisen.

Die Behandlungseinrichtung kann eine Reinigungseinrichtung für das bearbeitete Werkstück aufweisen. Die Behandlungseinrichtung, insbesondere die Reinigungseinrichtung, kann eine Blaseinrichtung aufweisen.

Die Behandlungseinrichtung, insbesondere die Reinigungseinrichtung, kann eine Aufnahmevorrichtung für Bearbeitungsrückstände, insbesondere eine Späneaufnahme, aufweisen.

die Behandlungseinrichtung kann mehrere nebeneinander und im Arbeitsbereich eines gemeinsamen Bearbeitungsgeräts insbesondere mehrere im Bogen um ein zentrales Bearbeitungsgerät, angeordnete Prozesskammern aufweist. Bei einer Mehrfachanordnung von Prozesskammern können diese in eine Einhausung für ein Bearbeitungsgerät integriert sein.

Die Bearbeitungseinrichtung kann modular ausgebildet sein.

Die Erfindung ist in den Zeichnungen beispielhaft und schematisch dargestellt. Im einzelnen zeigen:
- Figur 1:: eine perspektivische Draufsicht auf eine Bearbeitungseinrichtung mit mehreren Prozesskammern und einem zentralen Bearbeitungsgerät sowie mehreren Werkstückzuführungen,
- Figur 2:: eine perspektivische Ansicht einer Prozesskammer von der Zuführseite aus mit geöffnetem Zugang und einer Werkstückzuführung,
- Figur 3:: die Anordnung von Figur 2 mit geschlossenem zuführseitigem Zugang,
- Figur 4:: eine Prozesskammer mit Blick von der Bearbeitungsseite und einem geöffneten bearbeitungseitigem Zugang,
- Figur 5:: die Anordnung von Figur 4 mit einem geschlossenen bearbeitungsseitigen Zugang und einer zusätzlichen Behandlungseinrichtung der Prozesskammer,
- Figur 6:: eine Variante der Zellenform von Figur 1 und
- Figur 7:: eine Variante der Zellenform.

Die Erfindung betrifft eine Bearbeitungseinrichtung (1) und ein Bearbeitungsverfahren für Werkstücke (2).

Die Bearbeitungseinrichtung weist zumindest eine Prozesskammer (3) für das zu bearbeitende Werkstück (2) auf. Die Prozesskammer (3) besitzt eine umgebende Kammerwandung (4) mit einem verschließbaren Zugang (14,17) für ein externes Bearbeitungsgerät (12) und für eine Werkstückzuführung (13). Das Bearbeitungsgerät (12) führt in der Prozesskammer (3) und an dem dort befindlichen Werkstück (2) einen oder mehrere Bearbeitungsprozesse durch.

Der oder die Bearbeitungsprozesse können von beliebiger Art sein. Vorzugsweise handelt es sich um abtragende Prozesse, insbesondere um eine spanabhebende Bearbeitung. Ferner sind Fügeprozesse, z.B. Kleben, Löten, Schweißen etc. oder Umformprozesse, z.B. Falzen, Clinchen etc. möglich. Die Prozesse werden im Innenraum der Prozesskammer (3) durchgeführt.

Das Bearbeitungsgerät (12) ist außerhalb der Prozesskammer (3) und des im Kammerinnenraum befindlichen Prozessbereichs angeordnet. Das Bearbeitungsgerät (12) reicht mit seinem Prozesswerkzeug durch den geöffneten Zugang (14) in den Kammerinnenraum und zum Werkstück (2). Das Bearbeitungsgerät (12) kann einzeln oder mehrfach vorhanden sein.

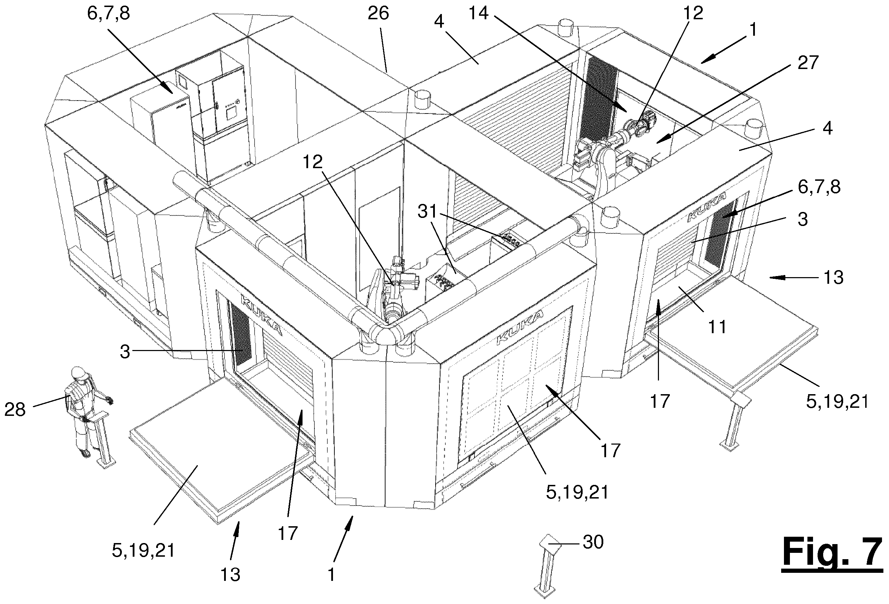

Das Bearbeitungsgerät (12) kann in beliebig geeigneter Weise ausgebildet sein. Es ist vorzugsweise automatisiert und kann z.B. als programmgesteuerte Werkzeugmaschine ausgebildet sein. In der gezeigten und bevorzugten Ausführungsform ist es als programmierbarer Industrieroboter mit mehreren Bewegungsachsen ausgebildet, der ein fest zugeordnetes oder bevorzugt automatisch wechselbares Prozesswerkzeug trägt. In der Geräteumgebung können gemäß Figur 7 Magazine (31) für austauschbare Werkzeuge vorhanden sein. Dies gilt auch für andere Ausführungsformen des Bearbeitungsgeräts (12).

Die Bearbeitungseinrichtung (1) weist zumindest eine oder mehrere Prozesskammern (3) auf. Das Bearbeitungsgerät (12) kann ebenfalls Bestandteil der Bearbeitungseinrichtung (1) ein. Dies ist nicht zwingend erforderlich. Ein Bearbeitungsgerät (12) kann von Betreiberseite beigestellt werden und gehört dann nicht zum Herstell- und Lieferumfang der beanspruchten Bearbeitungseinrichtung (1).

Die Prozesskammer (3) hat z.B. die in den Zeichnungen dargestellte kubische Form mit rechtwinklig zueinander angeordneten Seiten. Die Eckbereiche können rechteckig oder abgeschrägt bzw. abgerundet sein. Die Formgebung kann beliebig abgewandelt werden. Die Prozesskammer (3) hat zumindest einen verschließbaren Zugang (14) für das externe Bearbeitungsgerät (12) und einen verschließbaren Zugang (17) für eine Werkstückzuführung (13) Ein verschließbarer Zugang kann auch als Wartungszugang dienen und kann z.B. eine Werkzeugwechsel ermöglichen.

Gemäß der Erfindung sind zwei verschließbare Zugänge (14,17) vorhanden, die an verschiedenen Kammerseiten angeordnet sind. Vorzugsweise liegen die Zugänge (14,17) einander gegenüber. Die Zugänge (14,17) befinden sich an den vertikalen Breitseiten der Prozesskammer (3). In einer nicht gezeigten Abwandlung kann die Prozesskammer (3) mehr als zwei verschließbare Zugänge aufweisen.

Die Zugänge (14,17) weisen jeweils eine Zugangsöffnung (15,18) mit einem steuerbaren Verschluss (16,19) und ggf. einer umlaufenden Dichtung am Öffnungsrand auf. Der oder die Verschlüsse (16,19) bilden zumindest in Schließstellung eine mechanisch stabile Verschlusswand.

Der zu einem externen Bearbeitungsgerät (12) weisende Verschluss (16) ist z.B. als Rolltor, Falttür oder in anderer geeigneter Weise ausgebildet.

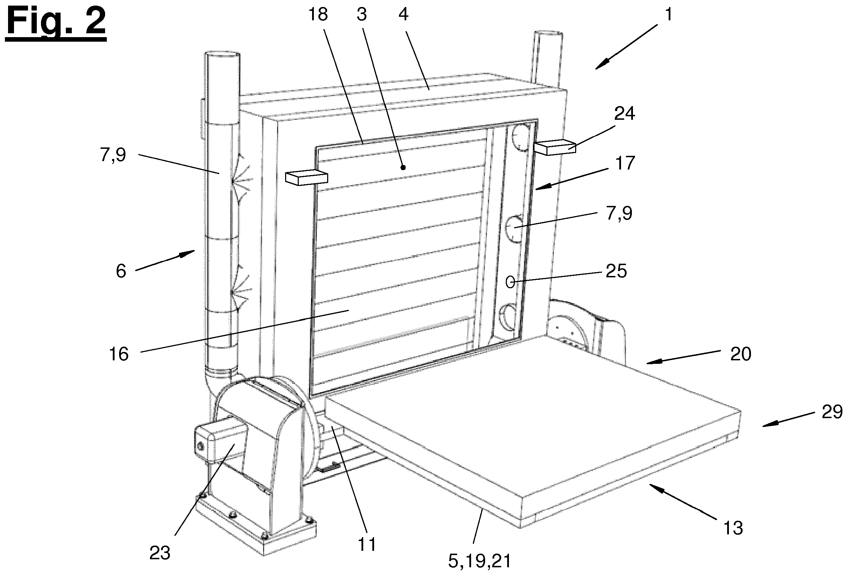

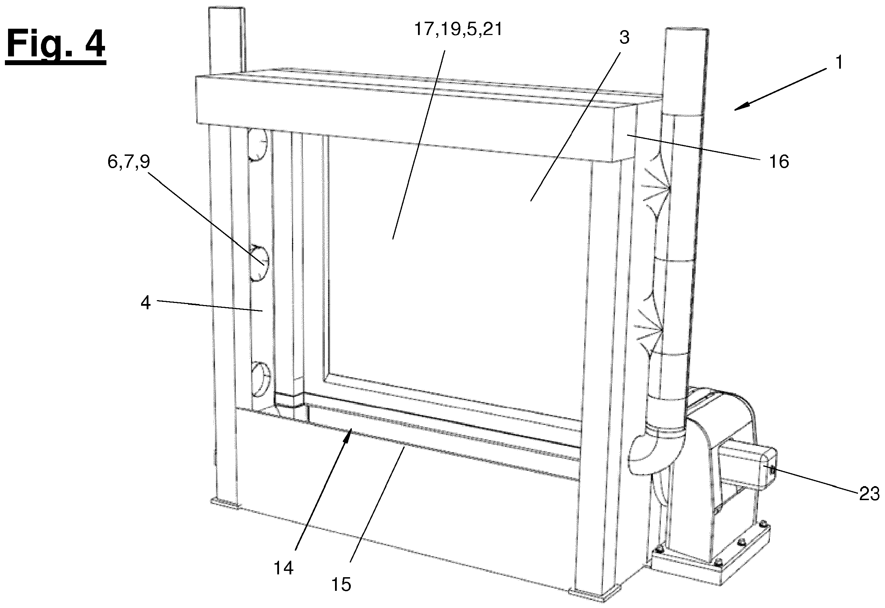

Die Verschlüsse (16,19) sind an eine Steuerung der Bearbeitungseinrichtung (1) angeschlossen. Die Steuerung kann separat angeordnet sein. Sie kann mit einer Robotersteuerung gekoppelt oder in diese integriert sein. Für den Bearbeitungsprozess werden die Zugänge (14,17) abwechselnd geöffnet und geschlossen. Zum Zuführung und Einbringen eines Werkstücks (2) in den Kammerinnenraum wird gemäß Figur 2 durch Verschlussbetätigung der zuführseitige Zugang (17) geöffnet, wobei zugleich der bearbeitungsseitige Zugang (14) geschlossen ist. Während des Bearbeitungsprozesses ist der zuführseitige Zugang (17) geschlossen und der bearbeitungsseitige Zugang (14) geöffnet. Figur 4 zeigt diese Stellung.

Die Werkstückzuführung (13) kann in unterschiedlicher Weise ausgebildet sein. Es kann sich z.B. um eine manuelle oder automatisierte und mechanisierte Werkstückzuführung (13) handeln. Bei einer manuellen Werkstückzuführung (13) kann z.B. ein Werker (28) ein Werkstück (2) in die Prozesskammer (3) und eine dortige Werkstückaufnahme einlegen. In der gezeigten und bevorzugten Ausführungsform ist eine manuelle Werkstückzuführung (13) mit mechanischer Werkerunterstützung durch eine Zuführeinrichtung (20) vorgesehen.

Das Werkstück (2) nimmt im Innenraum der Prozesskammer (3) vorzugsweise eine aufrechte Lage ein. Es ist dabei an einer stehenden Werkstückaufnahem (5) angeordnet. Dies ist besonders für großflächige Werkstücke (2) vorteilhaft.

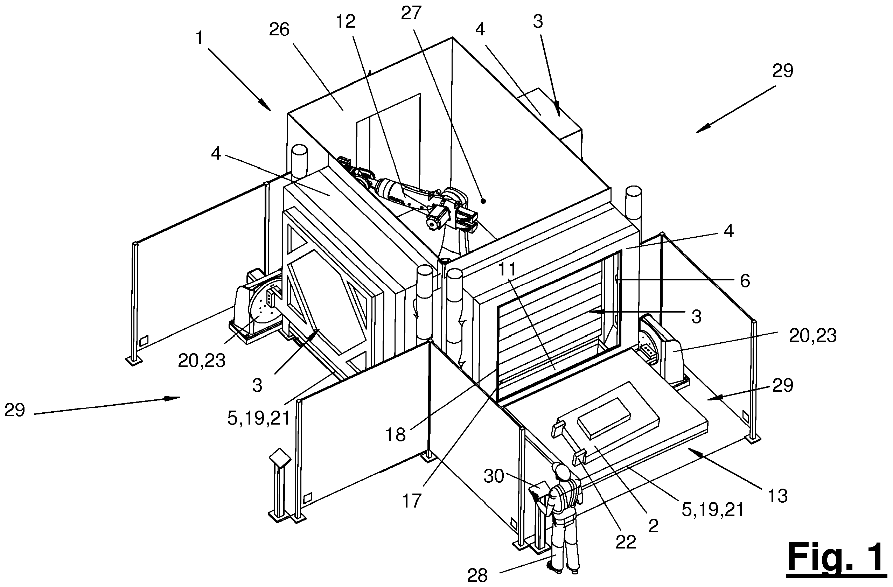

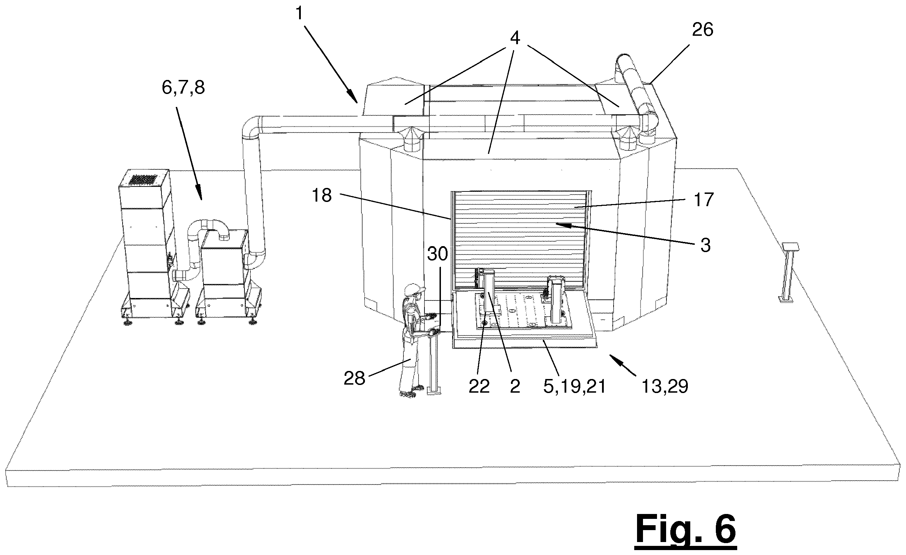

Dies können gemäß Figur 1 und 6 eine geringere oder ggf. auch größerer Höhe aufweisen. Durch die stehende Werkstücklage können ggf. die Tiefe und die Grundfläche der Prozesskammer (3) klein gehalten werden. Alternativ ist eine andere Werkstücklage, z.B. liegend oder in Schrägstellung, möglich.

Die Werkstückaufnahme (5) kann eine eigenständige Komponente im Inneren der Prozesskammer (3) sein, die ggf. mit einer geeigneten Mechanik bewegt und insbesondere geschwenkt werden kann. In der gezeigten und bevorzugten Ausführungsform ist die Werkstückaufnahme (5) ein Bestandteil der Zuführeinrichtung (20).

Gemäß der Erfindung bildet die Werkstückaufnahme (5) den Verschluss (19) für den zuführseitigen Zugang (17) und dessen Zugangsöffnung (18).

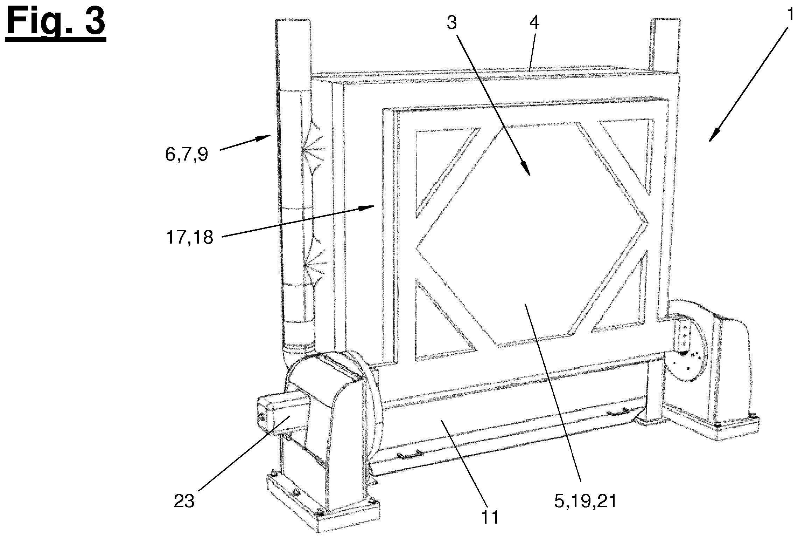

Bei der gezeigten Ausführungsform bildet die bewegliche und angetriebene Zuführeinrichtung (20) die Werkstückzuführung (13). Die Zuführeinrichtung (20) weist einen beweglichen Werkstückträger (21) und eine steuerbare Stelleinrichtung (23) für den Werkstückträger (21) auf. Der Werkstückträger (21) bildet die Werkstückaufnahme (5) und den besagten Beschluss (19). Er ist z.B. plattenförmig oder rahmenförmig ausgebildet. In der Funktion als Verschluss (19) besitzt er an einer Breitseite eine geschlossene Wandung, mit der die Zugangsöffnung (18) dicht verschlossen werden kann. Der Werkstückträger (21) weist gemäß Figur 1 und 6 eine Spanneinrichtung (22) für das Werkstück (2) auf. Die Spanneinrichtung (22) hält und positioniert das Werkstück (2) in einer vorgegebenen Lage. Mit der Stelleinrichtung (23) kann der Werkstückträger (21) bzw. die Werkstückaufnahme (5) aus einer z.B. liegenden und insbesondere horizontalen Zuführlage in die bevorzugt stehende, insbesondere vertikale Aufnahme- und Verschlusslage am Zugang (17) gebracht werden. Figur 2 und 3 zeigen diese Stellungen. Die Stelleinrichtung (23) ist zu diesem Zweck vorzugsweise als Kippeinrichtung ausgebildet. Sie dreht z.B. den Werkstückträger (21) um eine randseitige und bevorzugt horizontale Drehachse. Die Stelleinrichtung (23) ist ebenfalls an die besagte Steuerung angeschlossen. Alternativ sind andere Ausbildungen der Stelleinrichtung (23) möglich.

Die Bearbeitungseinrichtung (1) kann gemäß Figur 2 eine Andrückeinrichtung (24) für den Werkstückträger (21) bzw. die Werkstückaufnahme (5) aufweisen, die für einen festen Halt und einen dichten Anschluss an der Zugangsöffnung (18) in der stehenden Aufnahme- und Verschlussposition sorgt. Die Andrückeinrichtung (24) kann z.B. an der betreffenden Stirnwandung der Prozesskammer (3) neben der Zuführöffnung (18) angeordnet sein. Sie kann z.B. als Spanneinrichtung ausgeführt sein.

In der liegenden, insbesondere horizontalen Zuführposition ist der Werkstückträger (21) außerhalb der Prozesskammer (3) angeordnet und befindet sich in einem für einen Werker (28) zugänglichen Aufgabebereich (29). Dieser kann seitlich durch Schutzwände abgeschirmt sein. Der Werkstückträger (21) bildet eine Zuführplattform mit der Spanneinrichtung (22), auf die der Werker (28) ein einteiliges oder mehrteiliges Werkstück (2) legen kann. Hierbei kann er mechanische Unterstützung durch einen Balancer oder dgl. haben. Das Ende des Einlegeprozesses kann er gemäß Figur 1 und 6 durch ein Bedienterminal (30) der Steuerung mitteilen, die dann den weiteren automatisierten Zuführ- und Bearbeitungsprozess nebst automatischer Steuerung der Verschlüsse (16,19) und des Bearbeitungsgeräts (12) startet. Nach dem Prozess kann das bearbeitete Werkstück (2) wieder von dem wieder in der Zuführposition befindlichen Werkstückträger (21) entnommen werden.

In einer Variante kann die Werkstückübergabe automatisiert werden, wobei ein Handlingroboter ein einteiliges oder mehrteiliges Werkstück (2) an den Werkstückträger (21) in der Zuführposition übergibt und nach dem Bearbeitungsprozess wieder vom Werkstückträger (21) entnimmt.

Die Prozesskammer (3) weist in den gezeigten Ausführungsbeispielen eine zusätzliche Behandlungseinrichtung (6) für das in der Prozesskammer (3) aufgenommene Werkstück (2) und/oder für die innere Kammerumgebung, insbesondere die Kammerluft, auf. Die Behandlungseinrichtung (6) ist fakultativ und kann auch entfallen.

Die Behandlungseinrichtung (6) ist vorzugsweise mit der besagten Steuerung verbunden und derart gesteuert, dass sie bei geschlossener Prozesskammer (3) aktiv wird. Sie kann dabei eine Nachbehandlung des Werkstücks (2) und/oder der inneren Kammerumgebung durchführen. Alternativ kann die Behandlungseinrichtung (6) auch bei geöffneter Prozesskammer (3), insbesondere bei einem geöffneten bearbeitungsseitigen Zugang (14) aktiv sein.

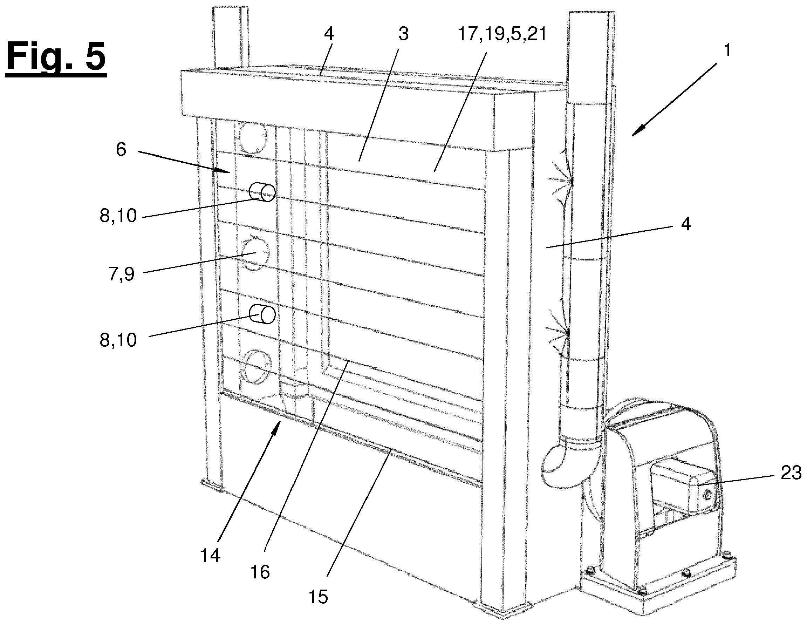

Die Behandlungseinrichtung (6) weist z.B. gemäß Figur 5 eine Entsorgungseinrichtung (7) für die Kammerluft und für die darin enthaltenen Partikel, insbesondere Prozessrückstände, auf. Die Behandlungseinrichtung (6), insbesondere die Entsorgungseinrichtung (7), kann eine Saugeinrichtung (9) aufweisen. Der in der Prozesskammer (3 erzeugte Unterdruck kann den Werkstückträger (21) in Verschlussstellung halten und die Andrückeinrichtung (24) unterstützen.

Die Behandlungseinrichtung (6) kann alternativ oder zusätzlich eine Reinigungseinrichtung (8) für das bearbeitete Werkstück (2) aufweisen. Die Behandlungseinrichtung (6), insbesondere die Reinigungseinrichtung (8), kann eine Blaseinrichtung (10) aufweisen. Die Behandlungseinrichtung (6), insbesondere die Reinigungseinrichtung (8), kann alternativ oder zusätzlich eine Aufnahmevorrichtung (11) für Bearbeitungsrückstände, insbesondere für Späne aufweisen. Die Aufnahmevorrichtung (11) befindet sich vorzugsweise an der Unterseite des Kammerinnenraums und ist z.B. als wannenförmige Späneaufnahme ausgebildet. Sie ist von außen zugänglich und kann bedarfsweise geleert und gereinigt werden.

Die Behandlungseinrichtung (6) kann ferner eine Luftzufuhr (25) für den Innenraum der Prozesskammer (3) aufweisen, welche den Luftaustausch und einen Spülungsvorgang innerhalb der Luftkammer (3) ermöglicht. Die in Figur 2 angedeutete Luftzufuhr (25) kann an beliebiger Stelle in der Kammerwandung (4) angeordnet und in beliebiger Weise ausgebildet sein. Vorzugsweise ist sie mit einem steuerbaren Verschluss, z.B. einer Klappe, versehen.

Die vorgenannte Nachbehandlung findet vorzugsweise nach Beendigung des Bearbeitungsprozesses statt. Hierbei sind ebenfalls bevorzugt alle Zugänge (14,17) geschlossen.

Bei der abtragenden, insbesondere spannenden Bearbeitung von Materialien, insbesondere Leichtbaumaterialien, wie z.B. GFK, CFK, Holz oder dgl. besteht eine potenzielle Gefährdung auf Grund von luftgebundenen Partikeln. Dies kann eine Gesundheitsgefährdung sein, wenn die Partikel inhaliert werden oder mit der Haut in Kontakt kommen. Ferner kann eine Brand- und Explosionsgefahr bestehen. Schließlich kann auch eine elektrische Gefährdung innerhalb und außerhalb der Prozesskammer (3) bestehen. Durch die Entsorgungseinrichtung (7), insbesondere die Saugeinrichtung (9) können die luftgebundenen Partikel abgesaugt und gefiltert oder auf andere Weise entsorgt werden. Hierbei kann eine werkzeugnahe Absaugung, eine Kammerabsaugung oder eine Absaugung der Werkstückaufnahme (5) stattfinden. Die Saugeinrichtung (9) kann hierfür in beliebig geeigneter Weise ausgebildet sein.

In den gezeigten Ausführungsbeispielen ist die Behandlungseinrichtung (6) an der Kammerwandung (4) angeordnet und/oder bildet die Kammerwandung (4). Wie z.B. Figur 2 bis 5 verdeutlichen, können in den seitlichen und/oder oberen/unteren Kammerwänden Saugöffnungen bzw. Saugdüsen angeordnet sein, die mit externen Saugschächten und mit einer Unterdruckquelle bzw. einer Saugpumpe (nicht dargestellt) in Verbindung stehen. Alternativ oder zusätzlich können Saugöffnungen am Werkstückträger (21) oder an anderen Stellen im Bereich der Prozesskammer (3) angeordnet sein. Die Entsorgungseinrichtung (7) kann eine Abscheide- oder Filtereinrichtung für die im Luftstrom enthaltenen Partikel aufweisen. Sie kann auch eine Wiederaufbereitung oder Regenerierung von eventuell wiederverwendbaren Partikeln beinhalten.

Die Reinigungseinrichtung (8), insbesondere die Blaseinrichtung (10), ist beispielhaft in Figur 5 angedeutet. Sie kann z.B. eine oder mehrere Blasdüsen aufweisen, die auf das Werkstück (2) und/oder die Werkstückaufnahme (5) bzw. den Werkstückträger (21) gerichtet sind. Die Blasdüsen können ortsfest oder mobil angeordnet sein. Sie lassen sich z.B. mittels einer Stelleinrichtung über das Werkstück (2) hinweg bewegen. Die eine oder mehreren Blasdüsen können sich bei einer stationären Anordnung an einer oder beiden seitlichen Wänden oder an der Oberwand der Kammerwandung (4) befinden. Es ist auch möglich, Blasdüsen an der bearbeitungsseitigen Kammerwand neben der Zugangsöffnung (15) zu positionieren und auf die Werkstückfront zu richten.

Die vorerwähnten Saugdüsen der Saugeinrichtung (9) können in ähnlicher Weise stationär oder mobil angeordnet und ausgebildet sein.

Die Behandlungseinrichtung (6) arbeitet vorzugsweise mit fluidischen Medien, insbesondere einer Absaugung der Kammerluft bzw. einem Einblasen eines Luftstroms oder eines anderen Gasstroms. Dies kann z.B. ein inertes Gas sein, um Brand- und Explosionsgefahr zu mindern. In einer weiteren Abwandlung kann mit flüssigen Medien, z.B. einer Wasch- oder Reinigungsflüssigkeit gearbeitet werden, die z.B. von einer entsprechend ausgebildeten Reinigungseinrichtung (8) mit Auftragsmitteln appliziert wird. Dies kann in Strahlenform oder in Form eines Schwalls geschehen. Die Reinigung kann das Werkstück (2) und/oder die zugewandte Seite der Werkstückaufnahme (5) bzw. des Werkstückhalters (21) betreffen.

Die Bearbeitungseinrichtung (1) kann in der vorerwähnten Weise eine oder mehrere Prozesskammern (3) aufweisen. In der gezeigten und bevorzugten Ausführungsform von Figur 1, 6 und 7 sind mehrere Prozesskammern (3) nebeneinander angeordnet. Sie befinden sich zudem vorzugsweise im Arbeitsbereich eines gemeinsamen Bearbeitungsgeräts (12). Besonders günstig ist die gezeigte Ausführungsform einer Anordnung von mehreren Prozesskammern (3) im Bogen um ein zentrales Bearbeitungsgerät (12). Die miteinander verbundenen und seitlich aneinander anschließenden Prozesskammern (3) sind dabei in eine Einhausung (26) für ein Bearbeitungsgerät (12) integriert. Die Einhausung (26) hat z.B. gemäß Figur 1 eine kubische Form mit einem rechteckigen Grundriss und umgibt einen Innenraum (27) mit dem dort angeordneten Bearbeitungsgerät (12). Die Einhausung (26) kann an einer freien Seite mit einer Wandung und einer dortigen Zugangstüre geschlossen werden. Im gezeigten Ausführungsbeispiel sind drei Prozesskammern in einem Bogen nebeneinander und mit jeweils einem 90°-Winkel angeordnet, wobei sich die besagte Wand mit Zugangstüre an der vierten Seite befindet.

Figur 6 zeigt eine Variante, bei der die Eckbereiche der kubischen Bearbeitungszelle (1) bzw. Einhausung (26) abgeschrägt sind. In Figur 6 sind außerdem weitere externe Teile der Behandlungseinrichtung (6) dargestellt, z.B. die Leitungs- bzw. Rohrführung, eine Saug- und/oder Blasquelle und eine Filter- bzw. Abscheideeinrichtung.

In Figur 7 ist eine weitere Variante dargestellt. Hier sind zwei kubische und bevorzugt zellenartige Bearbeitungseinrichtungen (1) mit Bearbeitungsgeräten (12) nebeneinander und unmittelbar aneinander angrenzend angeordnet. An der Kontaktstelle bzw. Übergangsstelle kann auf Prozesskammern (3) verzichtet werden, sodass beide Bearbeitungseinrichtungen bzw. Bearbeitungszellen (1) einen gemeinsamen und durchgehenden Innenraum (27) aufweisen. Hier können auch Magazine (31) für Werkzeuge oder andere Einrichtungen für eine Versorgung der Bearbeitungsgeräte (12), insbesondere Industrieroboter, vorhanden sein.

Wie Figur 7 verdeutlicht, können die Bearbeitungseinrichtung(en) (1) modular aufgebaut sein. Sie können z.B. eine einheitliche Bodenplatte aufweisen, auf der die Prozesskammern (3) und die Kammerwandungen (4) aufgebaut sind. An den Eckbereichen der hier benachbarten Prozesskammern (3) können abgeschrägte Verkleidungen oder andere Teile der Einhausung (26) vorhanden sein. Die Zahl und Anordnung der Prozesskammern (3) einer Bearbeitungseinrichtung (1) können dank der Modularität variieren.

Die gleichen Boden- und Wandelemente bzw. Elemente der Einhausung (26) können auch für andere Bereiche, z.B. einen angebauten Bereich für die Unterbringung der externen Versorgungsteile der Behandlungseinrichtung (6), angeordnet sein. Hierdurch kann eine gleiche Erscheinungsform und eine designmäßige Modularität der Einhausung (26) bzw. ihrer Wandungs- und Bodenelemente erreicht werden. In Figur 7 ist die Zuführeinrichtung (20) bzw. die Stelleinrichtung (23) der Übersicht halber nicht dargestellt.

Abwandlungen der gezeigten und bevorzugten Ausführungsformen sind in verschiedener Weise möglich. Insbesondere können die Merkmale der gezeigten Ausführungsbeispiele und der genannten Abwandlungen beliebig miteinander kombiniert und auch vertauscht werden, solange diese Merkmalskombinationen mit dem Wortlaut der Ansprüche vereinbar sind.

In Abwandlung der gezeigten Ausführungsbeispiele kann die Zahl der ggf. miteinander verbundenen Bearbeitungseinrichtungen oder Bearbeitungszellen (1) beliebig variieren. Ferner können auch mehrere Prozesskammern (3) mit ihrer Kammerwandung (4) seitlich nebeneinander in einer geraden oder evtl. verzweigten Reihe angeordnet sein. Es ist nicht zwingend erforderlich, dass die Prozesskammern (3) in einem Bogen um ein Bearbeitungsgerät (12) angeordnet sind und zusammen mit weiteren Wandelementen eine geschlossene Einhausung (26) für einen Innenraum (27) mit einem Bearbeitungsgerät (12) bilden. Es ist alternativ auch eine offene Anordnung möglich. Die Bearbeitungsgeräte (12) können dabei ggf. auf andere Weise, z.B. durch Zäune, gegen unbefugten Zutritt von außen abgeschirmt werden. Wenn ein Bearbeitungsgerät (12) z.B. als taktiler Roboter mit sensitiven Fähigkeiten für eine Mensch-Roboter-Kooperation oder -Kollaboration ausgebildet ist, kann ggf. auf zusätzliche Abschirmungen verzichtet werden.

### BEZUGSZEICHENLISTE

- 1: Bearbeitungseinrichtung
- 2: Werkstück
- 3: Prozesskammer
- 4: Kammerwandung
- 5: Werkstückaufnahme
- 6: Behandlungseinrichtung
- 7: Entsorgungseinrichtung
- 8: Reinigungseinrichtung
- 9: Saugeinrichtung
- 10: Blaseinrichtung
- 11: Aufnahmevorrichtung, Spänewanne
- 12: Bearbeitungsgerät, Industrieroboter
- 13: Werkstückzuführung
- 14: Zugang für Bearbeitungsgerät
- 15: Zugangsöffnung
- 16: Verschluss, Rolltor
- 17: Zugang für Zuführung
- 18: Zugangsöffnung
- 19: Verschluss, Werkstückaufnahme
- 20: Zuführeinrichtung
- 21: Werkstückträger, Zuführplattform
- 22: Spanneinrichtung
- 23: Stelleinrichtung, Kippeinrichtung
- 24: Andrückeinrichtung
- 25: Luftzufuhr
- 26: Einhausung, Kubus
- 27: Innenraum, Roboterraum
- 28: Werker
- 29: Aufgabebereich
- 30: Bedienterminal
- 31: Magazin

## Patentansprüche

1. Bearbeitungseinrichtung für Werkstücke (2), wobei die Bearbeitungseinrichtung (1) eine Prozesskammer (3) für das im Innenraum der Prozesskammer (3) zu bearbeitende Werkstück (2) mit einer umgebenden Kammerwandung (4) und mit einem verschließbaren Zugang (14,17) für ein externes Bearbeitungsgerät (12) und für eine Werkstückzuführung (13) aufweist, wobei die an verschiedenen Kammerseiten, insbesondere gegenüber liegend, angeordneten Zugänge (14,17) abwechselnd geöffnet und geschlossen werden und wobei während des Bearbeitungsprozesses der zuführseitige Zugang (17) der Prozesskammer (3) geschlossen und der zum externen Bearbeitungsgerät (12) weisende Zugang (14) geöffnet ist, wobei die Zugänge (14,17) jeweils eine Zugangsöffnung (15,18) mit einem steuerbaren Verschluss (16,19) aufweisen, **dadurch gekennzeichnet, dass** eine Werkstückaufnahme (5) den zur Werkstückzuführung (13) weisenden Verschluss (19) bildet.

2. Bearbeitungseinrichtung nach Anspruch 1, **dadurch gekennzeichnet, dass** die Prozesskammer (3) eine zusätzliche Behandlungseinrichtung (6) für das in der Prozesskammer (3) aufgenommene Werkstück (2) und/oder die innere Kammerumgebung, insbesondere die Kammerluft, aufweist.

3. Bearbeitungseinrichtung nach Anspruch 1 oder 2, **dadurch gekennzeichnet, dass** die Werkstückzuführung (13) auch die Abfuhr eines bearbeiteten Werkstücks (2) einschließt.

4. Bearbeitungseinrichtung nach einem der vorhergehenden Ansprüche, **dadurch gekennzeichnet, dass** das Werkstück (2) im Innenraum der Prozesskammer (3) in aufrechter Lage an einer stehenden Werkstückaufnahme (5) angeordnet ist.

5. Bearbeitungseinrichtung nach einem der vorhergehenden Ansprüche, **dadurch gekennzeichnet, dass** die Werkstückzuführung (13) als bewegliche und angetriebene Zuführeinrichtung (20) ausgebildet ist.

6. Bearbeitungseinrichtung nach Anspruch 5, **dadurch gekennzeichnet, dass** die Zuführeinrichtung (20) einen beweglichen, insbesondere drehbaren, Werkstückträger (21) und eine steuerbare Stelleinrichtung (23) hierfür aufweist, wobei der Werkstückträger (21) die Werkstückaufnahme (5) und den Verschluss (19) bildet.

7. Bearbeitungseinrichtung nach Anspruch 6, **dadurch gekennzeichnet, dass** die Stelleinrichtung (23) als Kippeinrichtung oder Dreheinrichtung ausgebildet ist, wobei die Kippeinrichtung den Werkstückträger (21) aus einer liegenden Zuführposition in eine stehende Aufnahme- und Verschlussposition dreht oder die Dreheinrichtung den Werkstückträger (21) aus einer stehenden seitlichen Zuführposition um eine aufrechte Achse in die stehende Aufnahme- und Verschlussposition dreht.

8. Bearbeitungseinrichtung nach einem der Ansprüche 6 und 7, **dadurch gekennzeichnet, dass** die Bearbeitungseinrichtung (1) eine Andrückeinrichtung (24) für den Werkstückträger (21) in der stehenden Aufnahme- und Verschlussposition aufweist.

9. Bearbeitungseinrichtung nach Anspruch 2, insbesondere nach Anspruch 2 und einem der Ansprüche 3 bis 8, **dadurch gekennzeichnet, dass** die Behandlungseinrichtung (6) eine Entsorgungseinrichtung (7) für die Kammerluft und darin enthaltene Partikel, insbesondere Prozessrückstände, aufweist.

10. Bearbeitungseinrichtung nach Anspruch 2, insbesondere nach Anspruch 2 und einem der Ansprüche 3 bis 9, **dadurch gekennzeichnet, dass** die Behandlungseinrichtung (6) eine Reinigungseinrichtung (8) für das bearbeitete Werkstück (2) aufweist.

11. Bearbeitungseinrichtung nach Anspruch 9 oder 10, **dadurch gekennzeichnet, dass** die Behandlungseinrichtung (6), insbesondere die Entsorgungseinrichtung (7), eine Saugeinrichtung (9) aufweist.

12. Bearbeitungseinrichtung nach Anspruch 2, insbesondere nach Anspruch 2 und einem der Ansprüche 3 bis 11, **dadurch gekennzeichnet, dass** die Behandlungseinrichtung (6) ein automatisches Bearbeitungsgerät (12), insbesondere einen programmierbaren Industrieroboter, aufweist.

13. Bearbeitungseinrichtung nach Anspruch 12, **dadurch gekennzeichnet, dass** die Behandlungseinrichtung (6) mehrere nebeneinander und im Arbeitsbereich eines gemeinsamen Bearbeitungsgeräts (12), insbesondere mehrere im Bogen um ein zentrales Bearbeitungsgerät (12), angeordnete Prozesskammern (3) aufweist.

14. Verfahren zum Bearbeiten von Werkstücken (2) mittels einer Bearbeitungseinrichtung (1), wobei das Werkstück (2) im Innenraum einer Prozesskammer (3) der Bearbeitungseinrichtung (1) von einem externen Bearbeitungsgerät (12) bearbeitet wird, wobei die Prozesskammer (3) eine umgebende Kammerwandung (4) mit einem verschließbaren Zugang (14,17) für das externe Bearbeitungsgerät (12) und für eine Werkstückzuführung (13) aufweist, wobei die an verschiedenen Kammerseiten, insbesondere gegenüber liegend, angeordneten Zugänge (14,17) abwechselnd geöffnet und geschlossen werden und wobei während des Bearbeitungsprozesses der zuführseitige Zugang (17) der Prozesskammer (3) geschlossen und der zum externen Bearbeitungsgerät (12) weisende Zugang (14) geöffnet wird, wobei wobei die Zugänge (14,17) jeweils eine Zugangsöffnung (15,18) mit einem steuerbaren Verschluss (16,19) aufweisen, **dadurch gekennzeichnet, dass** eine Werkstückaufnahme (5) den zur Werkstückzuführung (13) weisenden Verschluss (19) bildet.

15. Verfahren nach Anspruch 14, **dadurch gekennzeichnet, dass** die Werkstückzuführung (13) auch die Abfuhr eines bearbeiteten Werkstücks (2) einschließt, wobei die Zugänge (14,17) wieder abwechselnd geöffnet und geschlossen werden.

## Claims

1. Machining device for workpieces (2), wherein the machining device (1) has a process chamber (3) for the workpiece (2) to be machined in the interior of the process chamber (3), having a surrounding chamber wall (4) and having a closable access point (14, 17) for an external machining unit (12) and for a workpiece feed (13), wherein the access points (14, 17) arranged on different chamber sides, in particular opposite one another, are alternately opened and closed, and wherein, during the machining process, the feed-side access point (17) of the process chamber (3) is closed and the access point (14) directed towards the external machining unit (12) is opened, wherein the access points (14, 17) each have an access opening (15, 18) with a controllable closure (16, 19), **characterized in that** a workpiece receptacle (5) forms the closure (19) directed towards the workpiece feed (13).

2. Machining device according to Claim 1, **characterized in that** the process chamber (3) has an additional treatment device (6) for the workpiece (2) received in the process chamber (3) and/or for the inner chamber environment, in particular the chamber air.

3. Machining device according to Claim 1 or 2, **characterized in that** the workpiece feed (13) also includes the removal of a machined workpiece (2).

4. Machining device according to one of the preceding claims, **characterized in that** the workpiece (2) is arranged in the interior of the process chamber (3) in an upright position on a standing workpiece receptacle (5) .

5. Machining device according to one of the preceding claims, **characterized in that** the workpiece feed (13) is in the form of a movable and driven feed device (20).

6. Machining device according to Claim 5, **characterized in that** the feed device (20) has a movable, in particular rotatable, workpiece carrier (21) and a controllable setting device (23) therefor, wherein the workpiece carrier (21) forms the workpiece receptacle (5) and the closure (19).

7. Machining device according to Claim 6, **characterized in that** the setting device (23) is in the form of a tilting device or rotating device, wherein the tilting device rotates the workpiece carrier (21) from a lying feed position into a standing receiving and closure position, or the rotating device rotates the workpiece carrier (21) from a standing lateral feed position about an upright axis into the standing receiving and closure position.

8. Machining device according to either of Claims 6 and 7, **characterized in that** the machining device (1) has a contact-pressure device (24) for the workpiece carrier (21) **in that** standing receiving and closure position.

9. Machining device according to Claim 2, in particular according to Claim 2 and one of Claims 3 to 8, **characterized in that** the treatment device (6) has an extraction device (7) for the chamber air and particles contained therein, in particular process residues.

10. Machining device according to Claim 2, in particular according to Claim 2 and one of Claims 3 to 9, **characterized in that** the treatment device (6) has a cleaning device (8) for the machined workpiece (2).

11. Machining device according to Claim 9 or 10, **characterized in that** the treatment device (6), in particular the extraction device (7), has a suction device (9).

12. Machining device according to Claim 2, in particular according to Claim 2 and one of Claims 3 to 11, **characterized in that** the treatment device (6) has an automatic machining unit (12), in particular a programmable industrial robot.

13. Machining device according to Claim 12, **characterized in that** the treatment device (6) has a plurality of process chambers (3) arranged alongside one another and in the working area of a common machining unit (12), in particular a plurality of process chambers (3) arranged in an arc around a central machining unit (12).

14. Method for machining workpieces (2) by means of a machining device (1), wherein the workpiece (2) is machined in the interior of a process chamber (3) of the machining device (1) by an external machining unit (12), wherein the process chamber (3) has a surrounding chamber wall (4) with a closable access point (14, 17) for the external machining unit (12) and for a workpiece feed (13), wherein the access points (14, 17), arranged on different chamber sides, in particular opposite one another, are alternately opened and closed, and wherein, during the machining process, the feed-side access point (17) of the process chamber (3) is closed and the access point (14) directed towards the external machining unit (12) is opened, wherein the access points (14, 17) each have an access opening (15, 18) with a controllable closure (16, 19), **characterized in that** a workpiece receptacle (5) forms the closure (19) directed towards the workpiece feed (13).

15. Method according to Claim 14, **characterized in that** the workpiece feed (13) also includes the removal of a machined workpiece (2), wherein the access points (14, 17) are again alternately opened and closed.

## Revendications

1. Dispositif d'usinage pour pièces à travailler (2), le dispositif d'usinage (1) présentant une chambre de traitement (3) pour la pièce à travailler (2) à usiner à l'intérieur de la chambre de traitement (3), munie d'une paroi de chambre périphérique (4) et d'un accès verrouillable (14, 17) pour un appareil d'usinage externe (12) et pour un dispositif d'alimentation (13), dans lequel les accès (14, 17) disposés sur différents côtés de la chambre, en particulier à l'opposé, sont en alternance ouverts et fermés, et dans lequel pendant le processus d'usinage, l'accès côté alimentation (17) de la chambre de traitement (3) est fermé et l'accès (14) tourné vers l'appareil d'usinage externe (12) est ouvert, les accès (14, 17) présentant respectivement une ouverture d'accès (15, 18) munie d'une fermeture commandée (16, 19), **caractérisé en ce qu'**un logement de pièce (5) constitue la fermeture (19) tournée vers le dispositif d'alimentation (13).

2. Dispositif d'usinage selon la revendication 1, **caractérisé en ce que** la chambre de traitement (3) présente un dispositif de traitement (6) supplémentaire pour la pièce à travailler (2) reçue dans la chambre de traitement (3) et/ou pour l'environnement de chambre interne, en particulier pour l'air de la chambre.

3. Dispositif d'usinage selon la revendication 1 ou 2, **caractérisé en ce que** le dispositif d'alimentation (13) comprend aussi l'évacuation d'une pièce à travailler (2) usinée.

4. Dispositif d'usinage selon l'une quelconque des revendications précédentes, **caractérisé en ce que** la pièce à travailler (2) est disposée à l'intérieur de la chambre de traitement (3) dans une position verticale sur un logement de pièce (5) debout.

5. Dispositif d'usinage selon l'une quelconque des revendications précédentes, **caractérisé en ce que** le dispositif d'alimentation (13) est réalisé comme un dispositif d'alimentation mobile et entraîné (20).

6. Dispositif d'usinage selon la revendication 5, **caractérisé en ce que** le dispositif d'alimentation (20) présente un porte-pièce (21) mobile, en particulier rotatif, et un dispositif de réglage (23) commandé à cet effet, le porte-pièce (21) constituant le logement de pièce (5) et la fermeture (19).

7. Dispositif d'usinage selon la revendication 6, **caractérisé en ce que** le dispositif de réglage (23) est réalisé comme un dispositif de basculement ou un dispositif rotatif,
le dispositif de basculement faisant tourner le porte-pièce (21) d'une position d'alimentation couchée vers une position de logement et de fermeture debout, ou le dispositif de rotation faisant tourner le porte-pièce (21) d'une position d'alimentation latérale debout autour d'un axe vertical vers la position de logement et de fermeture debout.

8. Dispositif d'usinage selon l'une quelconque des revendications 6 et 7, **caractérisé en ce que** le dispositif d'usinage (1) présente un dispositif de pression (24) pour le porte-pièce (21) dans la position de logement et de fermeture debout.

9. Dispositif d'usinage selon la revendication 2, en particulier selon la revendication 2 et l'une des revendications 3 à 8, **caractérisé en ce que** le dispositif de traitement (6) présente un dispositif d'élimination (7) pour l'air de la chambre et des particules contenues dans celui-ci, en particulier des résidus de processus.

10. Dispositif d'usinage selon la revendication 2, en particulier selon la revendication 2 et l'une des revendications 3 à 9, **caractérisé en ce que** le dispositif de traitement (6) présente un dispositif de nettoyage (8) pour la pièce à travailler (2) usinée.

11. Dispositif d'usinage selon la revendication 9 ou 10, **caractérisé en ce que** le dispositif de traitement (6), en particulier le dispositif d'élimination (7) présente un dispositif d'aspiration (9).

12. Dispositif d'usinage selon la revendication 2, en particulier selon la revendication 2 et l'une des revendications 3 à 11, **caractérisé en ce que** le dispositif de traitement (6) présente un appareil d'usinage automatique (12), en particulier un robot industriel programmable.

13. Dispositif d'usinage selon la revendication 12, **caractérisé en ce que** le dispositif de traitement (6) présente plusieurs chambres de traitement (3) disposées côte à côte et dans la zone de travail d'un appareil d'usinage commun (12), en particulier plusieurs chambres de traitement disposées en arc autour d'un appareil d'usinage central (12).

14. Procédé d'usinage pour des pièces à travailler (2) au moyen d'un dispositif d'usinage (1), la pièce à travailler (2) étant usinée à l'intérieur d'une chambre de traitement (3) du dispositif d'usinage (1) par un appareil d'usinage externe (12), dans lequel la chambre de traitement (3) présente une paroi de chambre périphérique (4) munie d'un accès verrouillable (14, 17) pour l'appareil d'usinage externe (12) et pour un dispositif d'alimentation (13), dans lequel les accès (14, 17) disposés sur différents côtés de la chambre, en particulier à l'opposé, sont ouverts et fermés en alternance, et dans lequel pendant le processus d'usinage, l'accès côté alimentation (17) de la chambre de traitement (3) est fermé et l'accès (14) tourné vers l'appareil d'usinage externe (12) est ouvert, dans lequel les accès (14, 17) présentent respectivement une ouverture d'accès (15, 18) munie d'une fermeture commandée (16, 19), **caractérisé en ce qu'**un logement de pièce (5) constitue la fermeture (19) tournée vers le dispositif d'alimentation (13).

15. Procédé selon la revendication 14, **caractérisé en ce que** le dispositif d'alimentation (13) comprend aussi l'évacuation d'une pièce à travailler (2) usinée, les accès (14, 17) étant encore une fois ouverts et fermés en alternance.
